Europäisches Patentamt

European Patent Office

Office européen des brevets

(19)

(11) Veröffentlichungsnummer: **0 071 660**
**B1**

(12) **EUROPÄISCHE PATENTSCHRIFT**

(45) Veröffentlichungstag der Patentschrift:
04.06.86

(51) Int. Cl.⁴: **B 01 D 13/04,** B 41 M 3/10

(21) Anmeldenummer: 81106148.0

(22) Anmeldetag: 05.08.81

(54) Verfahren zum Kennzeichnen von trägerlosen Polymermembranen und asymmetrische trägerlose Polymermembran.

(43) Veröffentlichungstag der Anmeldung:
16.02.83 Patentblatt 83/7

(45) Bekanntmachung des Hinweises auf die Patenterteilung:
04.06.86 Patentblatt 86/23

(84) Benannte Vertragsstaaten:
AT BE CH DE FR GB IT LI NL SE

(56) Entgegenhaltungen:
DE - A - 2 357 191
DE - A - 2 704 600
DE - C - 497 268
DE - C - 913 646
US - A - 2 837 770

Ullmanns Encyklopädie der techn. Chemie, 4. Auflage,
Band 16, Seite 517

(73) Patentinhaber: **Carl Schleicher & Schüll GmbH & Co.
KG, Grimsehlstrasse 23, D-3352 Einbeck (DE)**

(72) Erfinder: **Hese, Nils, Dr., Negenborner Weg 68,
D-3352 Einbeck (DE)**
Erfinder: **Seeling, Alfred, Paul-Hindemith-Strasse 21,
D-3352 Einbeck (DE)**
Erfinder: **Weisweiler, Manfred, Garlebsen Nr. 5,
D-3350 Kreiensen 1 (DE)**

(74) Vertreter: **Jaeger, Klaus, Dr. et al, JAEGER & PARTNER
Patentanwälte Bergstrasse 48 1/2,
D-8035 München-Gauting (DE)**

## Beschreibung

Die Erfindung betrifft ein Verfahren zur Herstellung einer ein Muster tragenden dünnen trägerlosen Polymerfolie, insbesondere aus Cellulosederivaten, für die Filtration, und zwar speziell für die Mikrofiltration und für die Ultrafiltration, sowie für die Umkehrosmose.

Der Begriff «trägerlos» bedeutet dabei, dass die Membran nicht in einem mehr oder minder festen Verbund mit einer Stützstruktur, beispielsweise einem Filterkarton, vorliegt, sondern sowohl flächig als auch peripher unverstärkt und ungestützt ist.

Die Kennzeichnung solcher trägerlosen Polymermembranen, die häufig nur wenige Mikrometer dick sind und eine hochempfindliche Struktur aufweisen, ist ausserordentlich problematisch. Einerseits ist eine eindeutige Kennzeichnung solcher Membranen unbedingt erforderlich, anderseits ist ein Kennzeichnen der hochempfindlichen trägerlosen Polymermembranen zerstörungsfrei bislang nicht möglich. So müssen beispielsweise für Membranen, die für die Filtration verwendet werden, insbesondere also für die Mikrofiltration und die Ultrafiltration, vor allem die Porengrösse und der Membrantyp, das heisst der Werkstoff, aus dem die Membran aufgebaut ist, angegeben sein. Für Membranen, die asymmetrisch aufgebaut sind und insbesondere für die Umkehrosmose eingesetzt werden, muss vor allem die aktive Schicht eindeutig identifiziert werden, da die seitenrichtige Verwendung einer solchen asymmetrischen Membran von entscheidender Bedeutung für die Durchführung einer Umkehrosmose ist. Wird nämlich die aktive Schicht einer asymmetrischen Polymermembran nicht richtig erkannt und die Membran daher nicht in der erforderlichen Weise mit der aktiven Schicht zum Zulauf eingesetzt, so wird die Membran bei Druckbeaufschlagung irreversibel zerstört. Selbst der geschulte Fachmann ist jedoch nicht in der Lage, beispielsweise die aktive Schicht einer asymmetrischen Polymermembran oder die Porengrösse einer Filtrationsmembran ohne Hilfsmittel und Versuche eindeutig festzustellen. Zur Identifizierung der aktiven Schicht einer asymmetrischen Polymermembran dienen entweder Farbstoff-Haftversuche oder das Trocknen von Membranproben. Durch beide Verfahren wird die Membran in den Bereichen, in denen die Prüfverfahren durchgeführt werden, unbrauchbar. Dabei tritt insbesondere bei Proben, die zur Prüfung von der zu verwendenden Membran abgenommen werden, zusätzlich die Gefahr einer erneuten Seitenverwechslung zwischen der Probe und der zu verwendenden Membran auf.

Es besteht daher in der Praxis der dringende Wunsch nach einer direkten Kennzeichnung der Membran selbst. Da aber die Membranen nicht nur mechanisch hochempfindlich und chemisch meist nur sehr selektiv beständig sind, sondern auch für die meisten Einsatzzwecke absolut frei von Fremdmaterial sein müssen, stellen sich der direkten Kennzeichnung trägerloser Polymermembranen bislang ungelöste Hindernisse in den Weg. Der Versuch, Polymermembranen direkt zu bedrucken, scheitert bereits zumeist daran, dass die Polymermembran mechanisch beschädigt wird. Sodann lösen die in den verfügbaren Druckfarben enthaltenen Lösungsmittel häufig das Membranmaterial selbst an. Zudem müssen viele Membranen, insbesondere die asymmetrischen Membranen für die Umkehrosmose, ständig wässrig feucht gehalten werden, um eine Beeinträchtigung der Membranstruktur zu verhindern. Solche Membranen entziehen sich jedoch zusätzlich zu den bereits genannten Schwierigkeiten dem wasserfesten Aufdrucken von Kennzeichnungssymbolen. Zudem ist die aktive Schicht asymmetrischer Polymermembranen in der Regel nur höchstens ca. 0,1 μm dick, unterliegt also in erhöhtem Mass der Gefahr einer mechanischen Verletzung beim Bedrucken der Membran. Ein Bedrucken der Membran kann daher bestenfalls in Randbereichen erfolgen, die nicht für die Filtration oder für die Umkehrosmose benötigt werden. Beim Abtrennen solcher Randbereiche vor dem Einlegen der Membran besteht jedoch wiederum die Gefahr einer Verwechslung der Seiten oder einer Verwechslung der Membranen insgesamt.

Aus der deutschen Patentschrift 497 268 vom 14. April 1927 ist bekannt, gemusterte ein- oder mehrfarbige Folien aus Cellulosederivaten zur Verbilligung ihrer Herstellung nicht mehr durch Bedrucken vorgefertigter Folien, sondern in der Weise herzustellen, dass die die Musterung oder Mehrfarbigkeit hervorrufenden Stoffe fortlaufend auf eine Giessunterlage aufgetragen werden und hierauf in demselben Arbeitsgang fortlaufend die die Folie bildende Lösung aus Cellulosederivaten darübergegossen, gestrichen oder gespritzt wird. Zur Herstellung scharf konturierter Muster sollen die die Musterung hervorrufenden Stoffe in der Folienmasse unlöslich sein, während bei Verwendung in der Folienmasse löslicher Stoffe Diffusionseffekte erhalten werden, die zu verwaschenen Mustern führen. Die so hergestellten Folien dienen als Korkimitate oder Elfenbeinimitate der Herstellung von Zigarettenmundstücken. Zur Lösung des Problems der informativen Kennzeichnung von Polymermembranen für Filtrationszwecke oder Zwecke der umgekehrten Osmose vermag diese Offenbarung nichts beizutragen.

Aus der amerikanischen Patentschrift US-A-2 837 770 ist ein Verfahren zur Herstellung von einseitig bedruckten Filmen aus Polyvinylalkohol bekannt. Bei diesem Verfahren wird ein endloses Band durch eine die Polymermasse enthaltende Lösung geleitet, wobei die Polymerlösung mit im Bad befindlichen Walzen gegen das Band gepresst wird. Der so auf dem Band erzeugte Film kann nach Passieren einer Trocknungszone vom Band abgenommen werden. Auf dem Band befindliche farbige Muster können von dem auf das Band aufgebrachten Film absorbiert werden, so dass auch einseitig bedruckte Filme auf Polyvinylalkoholbasis nach diesem Verfahren herstellbar sind. Da jedoch die auf dem Band aufgebrachten Farbstoffe das Bad mit den Polymeren passieren, können nur in der Polymermasse unlösliche Farbstoffe verwendet werden. Ein derartiges Verfahren ist für die Herstellung von empfindlichen Polymermembranen für die Filtration nicht geeignet.

Der Erfindung liegt die Aufgabe zugrunde, ein Verfahren zur Herstellung einer ein Muster tragenden und so eindeutig gekennzeichneten dünnen trägerlosen Polymerfolie zu schaffen, wobei das Muster eine Kennzeichnung der Polymerfolie in dem für die Filtration oder Umkehrosmose genutzten Flächenbereich ermöglicht, ohne die Filtrationseigenschaften bzw. ohne die osmotischen Eigenschaften der Membran in irgendeiner Weise zu beeinträchtigen.

Zur Lösung dieser Aufgabe schafft die Erfindung ein Verfahren, das die im Anspruch 1 genannten Merkmale aufweist.

Die Erfindung schafft weiterhin eine asymmetrische trägerlose Polymermembran mit eindeutiger Kennzeichnung der aktiven Schicht.

Das Wesen der Erfindung beruht also darauf, zur Kennzeichnung einer trägerlosen Polymermembran nicht erst die fertige Membran selbst zu bedrucken, sondern vorab zunächst die Unterlage zu bedrucken, auf der die Membran durch Aufgiessen oder Aufstreichen einer Giessmasse hergestellt wird. Diese Giessmasse ist in aller Regel eine Lösung des Membranpolymers in organischen Lösungsmitteln. Diese Lösung kann Füllstoffe enthalten. Durch die in der Membrangiessmasse enthaltenen Lösungsmittel wird der zuvor auf die Unterlage aufgebrachte Druck von der Unterlage abgelöst und von der Membranmasse aufgenommen. Dies führt dazu, dass dann bei der gebräuchlichen Verfestigung der Membran durch Fällen oder Trocknen die Druckfarbe mit den auf der Unterlage gedruckten Konturen in die Membran aufgenommen und nach Fertigstellung der Membran mit dieser von der Giessunterlage abgenommen wird. Die Membran ist durch dieses Verfahren absolut zerstörungsfrei und chemisch beständig und ohne jede Beeinflussung der Membrankenndaten klar und eindeutig gekennzeichnet.

In der Praxis ist die Unterlage, auf die die Giessmasse für die Membran zur Herstellung der Membran gegossen wird und die erfindungsgemäss vor dem Vergiessen der Giessmasse bedruckt wird, vorzugsweise ein endloses Band mit glatter Oberfläche, das aus Metall, Gummi oder Kunststoff besteht. Die Unterlage ist vorzugsweise ein an seiner Oberfläche poliertes endloses Edelstahlband.

Um den Membranbildungsprozess nicht zu beeinflussen, ist die den Kennzeichnungssymbolen entsprechend auf die Unterlage aufgedruckte Druckfarbe vorzugsweise zumindest wischfest, insbesondere vorzugsweise vollständig durchgetrocknet, wenn die Membrangiessmasse auf die Giessunterlage aufgetragen wird.

Versuche haben gezeigt, dass praktisch jede auf eine gebräuchliche Giessunterlage aufgedruckte Druckfarbe in die Membran übertragen wird, wenn die Giesslösung auf die bedruckte Unterlage gegossen wird. Die saubersten und besten Ergebnisse werden jedoch erhalten, wenn nach einer Ausgestaltung der Erfindung vorzugsweise eine Druckfarbe verwendet wird, die in dem Lösungsmittel oder Lösungsmittelgemisch, das häufig auch als «Lösungsmittelsystem» bezeichnet wird, löslich ist, das als Lösungsmittelphase in der Membrangiessmasse dient. Weiterhin wird zur Durchführung des Kennzeichnungsverfahrens gemäss der Erfindung vorzugsweise eine Druckfarbe verwendet, die zumindest nach der Übertragung auf die bzw. in die Membran wasserfest ist. Welche Druckfarben diese Bedingung erfüllen, ist entweder den Hinweisen der Druckfarbenhersteller zu entnehmen oder im Zweifelsfall ohne weiteres durch einen Löslichkeitstest festzustellen. Da Druckfarben, die diese Anforderung erfüllen, in zahllosen Zusammensetzungen im Handel erhältlich sind, kann an dieser Stelle auf weitere Spezifizierungen verzichtet werden.

Insbesondere bei asymmetrischen Membranen ist das Verfahren der Erfindung besonders vorteilhaft einsetzbar, da beim Giessen und Herstellen solcher asymmetrischer Membranen die poröse inaktive Schwammschicht auf der Giessunterlage und die aktive Schicht an der Luftseite der Giessschicht ausgebildet werden. Die Druckfarbe wird beim Kennzeichnen asymmetrischer Membranen also in der osmotisch und für Filtrationszwecke inaktiven Schwammschichtstruktur aufgenommen. Dies kann insbesondere dann vorteilhaft zur Kennzeichnung transparenter Membranen herangezogen werden, wenn die Giessunterlage seitenrichtig mit den Kennzeichnungssymbolen bedruckt wird. Die inaktive Schicht bzw. die osmotisch unwirksame Unterseite der asymmetrischen Membran ist dann spiegelverkehrt gekennzeichnet, so dass von der aktiven Schicht aus betrachtet die Kennzeichnung seitenrichtig durchscheint. Das seitenrichtige Erkennen bzw. die seitenrichtige Lesbarkeit der Kennzeichnungssymbole kann also zur eindeutigen Identifizierung der aktiven Schicht der Membran dienen. Bei undurchsichtigen asymmetrischen Membranen erfolgt der Druck auf der Giessunterlage vorzugsweise spiegelverkehrt, so dass die inaktive Unterseite der asymmetrischen Membran dann seitenrichtig bedruckt ist. Während im Fall durchsichtiger oder durchscheinender Membranen dem Benutzer der Membranen die Anweisung zu geben ist, dass die aktive Schicht oben liegt, wenn die Kennzeichnungssymbole seitenrichtig lesbar sind, ist im Fall der undurchsichtigen Membranen dem Benutzer die Anweisung zu geben, dass die unbedruckte Seite der Membran die aktive Schicht ist. Auf der bedruckten inaktiven Unterseite sind dann die erforderlichen Kennzeichnungssymbole im Bedarfsfall seitenrichtig lesbar.

Versuche haben gezeigt, dass selbst bei relativ starkem Auftrag der Druckfarbe auf die Giessunterlage und bei vollkommener Durchtrocknung der aufgebrachten Druckfarbe die Druckfarbe vollständig rückstandsfrei von der Membran aufgenommen wird. Das Verfahren gemäss der Erfindung kann also ohne weiteres für die gebräuchliche kontinuierliche Membranherstellung verwendet werden, bei der endlos umlaufende Bänder als Giessunterlage verwendet werden. Dabei wird die Unterlage vorzugsweise unmittelbar nach Abnahme der verfestigten oder vorverfestigten Membran von der Unterlage erneut bedruckt, so dass die Druckfarbe zumindest wischfest aufgetrocknet ist, bis die auf der Unterlage bedruckte Stelle wieder zu der Stelle gelangt ist, an der erneut die Giessmasse auf die Unterlage aufgestrichen oder aufgegossen wird. Auf diese Weise können die Membranen problemlos auch nach Herstellungsansätzen und Herstellungsdatum gekennzeichnet werden, was insbesondere für die Herstellergarantie von Bedeutung ist.

Die Kennzeichnung der Membranen kann nach dem Verfahren gemäss der Erfindung sowohl einfarbig als auch mehrfarbig erfolgen. Dies eröffnet insbesondere auch die Möglichkeit der Farbcodierung der Membrankenndaten, beispielsweise des Membranmaterials, der Porengrösse oder des Einsatzzweckes, für den die jeweilige Membran bestimmt ist.

Insbesondere bei der Verwendung verschiedenfarbiger Druckfarben kann das für die jeweiligen Druckfarben verwendete Lösungsmittelsystem so eingestellt werden, das heisst kann das Lösungsmittelgemisch hinsichtlich der Konzentration der einzelnen Lösungsmittel und der Auswahl dieser Lösungsmittel so eingestellt werden, dass gewährleistet ist, dass sämtliche auf die Giessunterlage aufgedruckten Giessfarben vollkommen trocken und wischfest unter das Aufgabegerät für die Giessmasse gelangen.

Zu den von der Menge her wohl am häufigsten verwendeten Polymermembranen für die Filtration und für die Umkehrosmose zählen heute wahrscheinlich die Celluloseacetatmembranen. Zum Bedrucken solcher Celluloseacetatmembranen nach dem Verfahren der Erfindung können beispielsweise Druckfarben eingesetzt werden, die gebräuchliche Pigmente oder Farbstoffe, insbesondere Russ für schwarz oder Farbstoffe auf Phthalsäurebasis für andere Farben enthalten. Als Bindemittel in solchen Druckfarben können gebräuchliche Bindemittel auf Polyamidbasis, Polyacrylatester oder Nitrocellulose eingesetzt werden. Als Lösungsmittel für Druckfarben dieser Art werden vorzugsweise Ketongemische verwendet, beispielsweise Gemische aus $C_1$–$C_4$-Ketonen, wobei sich die Einstellung der Lösungsmittelsysteme nach der benötigten Trocknungsdauer richtet. Statt der Ketone können als Lösungsmittel auch Ester oder Cyclohexan verwendet werden. Die Herstellung solcher Druckfarben ist dem Fachmann ohne weiteres geläufig. Auch können die zahllosen im Handel erhältlichen Druckfarben nicht nur für das Verfahren der Erfindung ohne weiteres eingesetzt werden, sondern auch relativ problemlos durch eine Veränderung der Lösungsmittelphase den jeweils gewünschten Spezielbedingungen angepasst werden.

## Patentansprüche

1. Verfahren zur Herstellung einer ein Muster tragenden dünnen trägerlosen Polymerfolie, insbesondere aus Cellulosederivaten, bei dem zunächst eine Unterlage mit dem Muster bedruckt wird, dann die der Herstellung der Polymerfolie dienende Giessmasse auf die bedruckte Unterlage gegossen wird, und schliesslich die Polymerfolie nach der Verfestigung unter Mitnahme der Druckfarbe von der Unterlage abgenommen wird, gekennzeichnet durch die Kombination der folgenden Merkmale:

(a) die Polymerfolie ist eine asymmetrische Membran für die Filtration oder Umkehrosmose;

(b) die Druckfarbe ist auf der Unterlage wischfest getrocknet, wenn die Membrangiessmasse aufgegossen wird; und

(c) die getrocknete Druckfarbe ist in dem Lösungsmittel oder Lösungsmittelsystem der Membrangiessmasse löslich.

2. Verfahren nach Anspruch 1, dadurch gekennzeichnet, dass die Unterlage ein endloses poliertes Stahlband ist.

3. Verfahren nach einem der Ansprüche 1 oder 2, dadurch gekennzeichnet, dass die Muster Kennzeichnungssymbole sind, die für die Kennzeichnung einer transparenten Membran seitenrichtig auf die Unterlage gedruckt werden.

4. Asymmetrische, trägerlose Polymermembran für die Filtration und für die Umkehrosmose hergestellt nach einem der Verfahren der Ansprüche 1 bis 3, gekennzeichnet durch Zeichen und/oder Symbole, die mittels einer Druckfarbe auf der für die Filtration und osmotisch unwirksamen Unterseite der Membran angebracht sind.

5. Membran nach Anspruch 4, dadurch gekennzeichnet, dass die Druckfarbe auf der Membran wasserfest ist.

6. Membran nach einem der Ansprüche 4 oder 5, dadurch gekennzeichnet, dass die Zeichen und/oder Symbole bei einer transparenten Membran bei Betrachtung von der aktiven Oberfläche her seitenrichtig erscheinen.

## Claims

1. Process for manufacturing a thin carrierless polymeric membrane especially made of cellulose derivatives and carrying a design, whereby first a support is imprinted with the design, then the casting mass serving for the production of the polymeric membrane is poured onto the imprinted support and whereby finally the polymeric membrane is removed from the support after solidification while taking the printing dye along with it, characterized by the combination of the following features:

(a) the polymeric membrane is an asymmetric membrane for filtration purposes or for the reverse osmosis;

(b) the printing dye is dried in a wipe-proof manner on the support at the time the membrane casting mass is poured onto the support; and

(c) the dried printing dye is soluble in the solvent or solvent-system of the membrane casting mass.

2. Process according to claim 1, characterized in that the support is a continuous polished steel band.

3. Process according to one of the claims 1 or 2, characterized in that the designs are marking designs which for the marking of a transparent membrane are imprinted onto the support in a manner correctly identifying the side in question.

4. Asymmetric carrierless polymeric membrane for filtration purposes and for the reverse osmosis manufactured according to one of the processes of claims 1 to 3, characterized by signs and/or symbols which, by means of a printing dye, are applied onto the bottom side of the membrane which is ineffective for filtering purposes and is osmotically ineffective.

5. Membrane according to claim 4, characterized in that the printing dye on the membrane is water proof.

6. Membrane according to one of the claims 4 or 5, characterized in that the signs and/or symbols appear in a manner correctly reflecting the side in question if the membrane is transparent and if looked at from the active surface.

**Revendications**

1. Procédé de fabrication d'une feuille de polymère mince, marquée, sans support, plus spécialement d'une feuille en un dérivé de cellulose, dans lequel on imprime d'abord la marque sur un modèle, ensuite on verse la composition en fusion sur le modèle imprimé, et enfin on ôte la feuille de polymère après le raidissement en entraînant l'encre d'imprimerie provenant du modèle, caractérisé en ce qu'il présente les particularités suivantes:

a) la feuille de polymère est une membrane asymétrique pour la filtration ou l'osmose inverse;

b) l'encre d'impression est séchée sur le modèle de manière à résister à l'essuyage au moment où la composition en fusion pour la membrane est versée; et

c) l'encre d'impression séchée est soluble dans le solvant ou dans le système dissolvant de la composition en fusion pour la membrane.

2. Procédé selon la revendication 1, caractérisé en ce que le modèle est un ruban sans fin en acier poli.

3. Procédé selon la revendication 1 ou 2, caractérisé en ce que les marques représentent des symboles distinctifs qui sont imprimés à l'endroit sur le modèle pour caractériser une membrane transparente.

4. Membrane asymétrique en polymère sans support pour la filtration et l'osmose inverse fabriquée selon l'un des procédés définis dans l'une quelconque des revendications 1 à 3, caractérisée en ce qu'elle comporte des signes et/ou des symboles apportés à l'aide d'une encre à imprimer sur la face inférieure inactive pour la filtration et l'osmose, de la membrane.

5. Membrane selon la revendication 4, caractérisée en ce que l'encre d'imprimerie sur la membrane est résistante à l'eau.

6. Membrane selon la revendication 4 ou 5, caractérisée en ce que les signes et/ou les symboles se présentent à l'endroit dans le cas d'une membrane transparente vue du côté de la surface active.